# EUROPÄISCHE PATENTSCHRIFT

(11) **EP 1 372 323 B1**
(45) Veröffentlichungstag und Bekanntmachung des Hinweises auf die Patenterteilung: **02.02.2011**
(21) Anmeldenummer: 03021398.7
(22) Anmeldetag: 01.12.1994
(51) Int. Cl.: H04M 1/72, H04M 1/725

(54) **Mobiltelefon**
Mobile telephone
Téléphone mobile

(30) Priorität: 17.12.1993 DE 4343295
(43) Veröffentlichungstag der Anmeldung: 17.12.2003
(62) Teilanmeldung aus: 94118962.3
(73) Patentinhaber: SIEMENS AKTIENGESELLSCHAFT, 80333 München (DE)
(72) Erfinder: Christal, Philip, 85646 Anzig (DE)

(56) Entgegenhaltungen:
- EP-A- 0 494 525
- DE-A- 4 233 066
- US-A- 4 982 424
- PATENT ABSTRACTS OF JAPAN vol. 013, no. 354 (E-802), 8. August 1989 (1989-08-08) & JP 01 114220 A (HITACHI LTD), 2. Mai 1989 (1989-05-02)
- WAGENLEHNER: "BEDIENUNG DES MODERNEN MOBILTELEFONS - EINFACH UND LOGISCH" TELCOM REPORT, Bd. 10, Nr. 2, März 1987 (1987-03), Seiten 99-101, XP000858611 MÜNCHEN
- CHRISTAL: "GSM-HANDY MIT TOP-HANDLING" TELCOM REPORT, Bd. 16, Nr. 6, Januar 1994 (1994-01), Seiten 332-335, XP000425543 MÜNCHEN

## Beschreibung

Die Erfindung bezieht sich auf ein Mobiltelefon mit einem Tastenfeld mit Wähl- und Funktionstasten und einem Anzeigefeld sowie mit ggf. im Bedienteil integrierten Sende-/Empfangseinrichtungen (Handheld).

Im GSM (Group Special Mobile), dem neuen Mobilfunksystem, werden neue Nachrichtendienste eingeführt und einige von anderen Mobilfunksystemen übernommen. Diese Dienste (Serviceleistungen) beinhalten Sprach- und Textnachrichten und die Anruferidentifikation (Caller Line Identification - CLI). Wie es aus vielen anderen Bereichen des Fernsprechwesens erkennbar ist, werden viele Merkmalsoperationen vom Benutzer kaum verstanden werden. Daraus folgt geringe Benutzerakzeptanz und Gebrauch. Potentielle Mensch-Maschine-Interface-Probleme mit Nachrichtenservice beruhen auf dem Wissen, ob eine neue Nachricht wartet, deren Typ zu identifizieren ist und die zugänglich zu machen ist durch Hören oder Sehen.

Sprachnachrichtensysteme in Analognetzwerken waren dem Benutzer zugänglich durch routinemäßiges Befragen ihrer Sprachnachrichtenzentren oder durch Empfang eines Anrufes von ihrem Sprachnachrichtenzentrum (VMC - Voice Message Center) beim Anschalten. Der Erfindung liegt die Aufgabe zugrunde, für ein Mobiltelefon der eingangs beschriebenen Art eine einfache Lösung für eine Nachrichtenanzeige zu schaffen.

Diese Aufgabe wird gemäß der Erfindung gelöst durch eine im Standby-Betrieb mit der Bezeichnung "Nachricht" ("Message") bezeichnete Taste (Softkey), die bei Empfang einer Nachricht über Kurznachrichtenservice (SMS - Short Message Service) oder Anrufidentifizierung blinkt und ggf. mit einem akustischen Signal gekoppelt ist und bei deren Drücken ein Nachrichtenmenue angezeigt wird, das Mitteilungen über eine Sprachnachricht, eine Textnachricht einschließlich der Anzahl von neuen oder alten Nachrichten enthält sowie die Anzahl von bekannten Anrufen, von unbekannten Anrufen und eine Möglichkeit bietet, Nachrichten zu versenden.

Vorteilhafte Ausgestaltungen und Weiterbildungen des Erfindungsgegenstandes sind in den Unteransprüchen angegeben.

Nachstehend wird die Erfindung anhand eines in der Zeichnung dargestellten Ausführungsbeispiels näher erläutert.

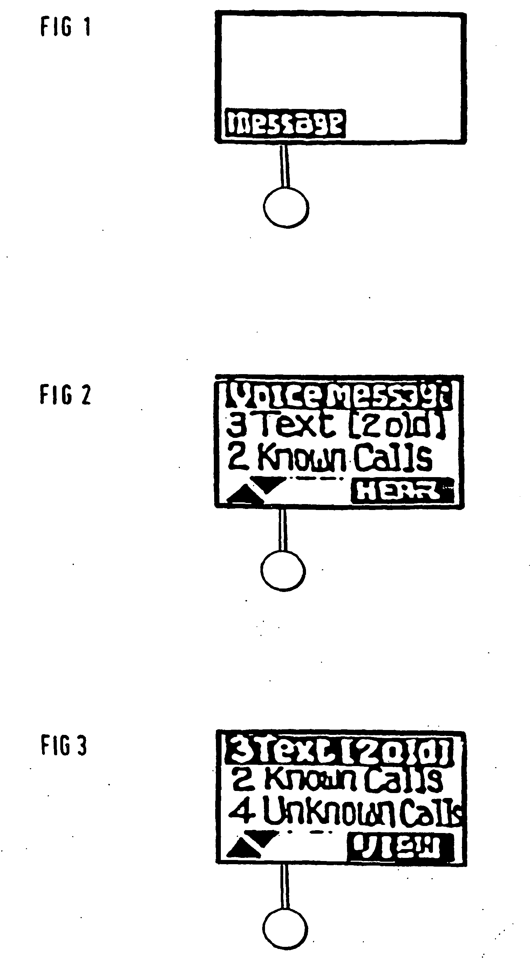

Als Display wird ein neues, für grafische Darstellungen besonders geeignetes Display verwendet, das aus einer Vielzahl von Verbindungsknoten (Pixels) aus sich kreuzenden waagerechten und senkrechten Leitungen besteht, die einzeln ansteuerbar sind. Im Standby-Betrieb ist ein zu einer Taste (Softkey) gehörendes Anzeigefeld im Display mit der Bezeichnung "Nachricht" ("Message") in der gewünschten Sprache bezeichnet (vgl. Figur 1). Beim Empfang einer Nachricht über den Kurznachrichtenservice (SMS - Short Message Service) oder einen nicht angenommenen Anruf mit Anrufidentifizierung (CLI) blinkt die Bezeichnung "Message", um somit die Aufmerksamkeit auf sich zu lenken. Das Blinken kann mit einem akustischen Signal gekoppelt sein. Die Anzeige "Message" blinkt unter folgenden Bedingungen: Empfang einer Sprachnachricht, einer Textnachricht (SMS) einschließlich der Anzahl von neuen oder alten Nachrichten sowie der Anzahl von bekannten Anrufen (CLI) und von unbekannten Anrufen. Durch Drücken des Softkey werden entsprechende Mitteilungen in einem Nachrichtenmenue angezeigt; es wird also der Nachrichtenstatus dargestellt. Anzeigen für Sprachemeldung, Kurznachrichten (SMS) und Anrufidentifizierung (CLI) blinken dabei, wenn neue, noch nicht gelesene Nachrichten empfangen worden sind. Wenn der Textnachrichtenspeicher voll ist, blinkt das Display ebenfalls. Ein Benutzer kann zur gewünschten Nachricht rollen und je nach Bedarf entweder eine Taste (Softkey) "Hören" oder "Sehen" drücken (vgl. Figuren 2 und 3). Durch Drücken der Taste "Hören" wird ein Ruf zum Sprachnachrichtenzentrum (VMC - Voice Message Center) initiiert; eine verbleibende Zugangskontrolle befindet sich dabei in Übereinstimmung mit dem Sprachnachrichtenzentrum durch Benutzung von Sprache oder codierten Schlüsselkommandos.

Beim ersten Zugriff auf ihr Sprachnachrichtenzentrum sind die Benutzer angehalten, eine "Set"-Taste zu drücken und die erforderliche Telefon-Nummer (Message Center Phone Number) einzugeben. Erneutes Drücken bewirkt danach eine Speicherung mit einem Identifizierer auf der SIM. Die "Message Center Phone Number" muss der Benutzer von seinem Netzbetreiber (Operator) als Teil der Registrierung dieses Dienstes mitgeteilt worden sein. Es kann ebenso vorgesehen werden, dass die Nummer vom Operator oder Händler auf der SIM vorprogrammiert wird.

Die Tastenbezeichnungen (Softkey-Legenden) können verwendet werden zur Markierung des Endes einer Nachricht und zum Offerieren der vorhandenden Möglichkeiten von Änderungen (Edit) und Löschen (Delete). Ebenso kann die blinkende "Löschen"-Bezeichnung verwendet werden, um einen vollen Nachrichtenspeicher anzuzeigen.

## Patentansprüche

1. Mobiltelefon mit einem Tastenfeld mit Wähl- und Funktionstasten und einer Anzeigeeinrichtung und sowie mit integrierten Sende- und Empfangseinrichtungen,
**gekennzeichnet durch**
a) ein einer Taste des Mobiltelefons zugeordnetes, eine geeignete Tasten-Bezeichnung wie z.B. das Wort "Nachricht" oder dazu gleichwertige Ausdrücke anderer Sprachen darstellendes Anzeigefeld der Anzeigeeinrichtung, welches
b) bei bestimmten Ereignissen, wie z.B. beim Empfang einer Nachricht über Kurznachrichtenservice oder z.B. bei einer erfolgten Anrufidentifizierung, die Tasten-Bezeichnung zumindest einmal aus einem ersten Zustand, bei dem sie nicht dargestellt wird, in einen zweiten Zustand, bei dem sie dargestellt wird, wechseln lässt, wobei
c) ein Drücken der diesem Anzeigefeld zugeordneten Taste bewirkt, dass mit Hilfe der Anzeigeeinrichtung des Mobiltelefons dem Benutzer ein Nachrichtenmenü angezeigt wird, das Mitteilungen über eine Sprachnachricht oder eine Textnachricht oder die Anzahl von bekannten oder unbekannten Anrufen enthält und
d) dem Benutzer eine Möglichkeit zum Versenden, Abrufen oder Löschen von Nachrichten oder zum Abruf von nicht angenommenen Anrufen geboten wird.

2. Mobiltelefon nach Anspruch 1, bei dem das Nachrichtenmenü zusätzlich Mitteilungen über die Anzahl von neuen oder alten Sprach- oder Textnachrichten öder Datennachrichten enthält.

3. Mobiltelefon nach einem der vorhergehenden Ansprüche, bei dem bei das Wechseln aus dem ersten Zustand, bei dem sie nicht dargestellt wird, in den zweiten Zustand, bei dem sie dargestellt wird, mit einem akustischen Signal gekoppelt ist.

4. Mobiltelefon nach einem der vorhergehenden Ansprüche,
**dadurch gekennzeichnet,**
**dass** dem Anzeigefeld eine Taste mit "Scrolling"-Funktion zugeordnet ist, mit dessen Hilfe der Benutzer durch ein sogenanntes "Scrolling" zu einer von ihm gewünschten Nachricht rollt, und - je nach Bedarf - die Funktion "Hören" oder "Sehen" auswählt, wobei durch Auswahl der Funktion "Hören" ein Ruf zum Sprachnachrichtenservice initiiert wird.

## Claims

1. Mobile telephone with a keypad with dialling and function keys and a display device and also with integrated transmit and receive devices,
**characterised by**
a) a display field of the display device assigned to a key of the mobile telephone showing a suitable key label, such as the word "message" for example, or expressions in other languages equivalent thereto, which
b) for specific events such as on receipt of a message via a short message service for example or if a call has been identified for example, causes the key label to switch at least once from a first state in which it is not displayed into a second state in which it is displayed, with,
c) pressing the key assigned to this display field having the effect, with the aid of the display device of the mobile telephone, of displaying to the user a message menu containing information about a voice message or a text message or about the number of known or unknown calls, and
d) offering the user an option of sending, retrieving or deleting messages or of retrieving missed calls.

2. Mobile telephone according to claim 1 in which the message menu contains additional information about the number of new or old voice or text messages or data messages.

3. Mobile telephone according to one of the previous claims in which the switching from the first state, in which the label is not displayed, into the second state, in which it is displayed, is coupled to an acoustic signal.

4. Mobile telephone according to one of the previous claims,
**characterised in that,**
the display field is assigned a key with a "scrolling" function with the aid of which the user scrolls to a desired message, and - as required - selects the function "Listen" or "View", with selection of the "Listen" function initiating a call to the voice message service.

## Revendications

1. Téléphone mobile avec une zone de clavier comprenant des touches de numérotation et de fonction et un dispositif d'affichage, et avec des dispositifs d'émission et de réception intégrés,
**caractérisé par**
a) une zone d'affichage du dispositif d'affichage, affectée à une touche du téléphone mobile et représentant une désignation appropriée de la touche, telle que, par exemple, le mot "Message" ou des expressions équivalentes dans d'autres langues, laquelle zone d'affichage
b) lors de certains événements, comme p.ex. lors de la réception d'un message par le biais du service de messagerie SMS ou p.ex. lorsqu'un appel a été identifié, fait passer la désignation de la touche, au moins une fois, d'un premier état où elle n'est pas représentée, à un deuxième état où elle est représentée,
c) un appui sur la touche affectée à cette zone d'affichage ayant pour effet d'afficher à l'utilisateur, à l'aide du dispositif d'affichage du téléphone mobile, un menu de messages contenant des informations sur un message vocal ou un message texte ou le nombre d'appels connus ou inconnus et
d) offrant à l'utilisateur la possibilité d'envoyer, de consulter ou de supprimer des messages ou de consulter des appels non acceptés.

2. Téléphone mobile selon la revendication 1, dans lequel le menu de messages contient en outre des informations sur le nombre de nouveaux ou anciens messages vocaux ou texte ou de messages de données.

3. Téléphone mobile selon l'une des revendications précédentes, dans lequel le passage du premier état où elle n'est pas représentée, au deuxième état où elle est représentée, est couplé avec un signal acoustique.

4. Téléphone mobile selon l'une des revendications précédentes,
**caractérisé en ce que**
une touche dotée de la fonction "Scrolling" est affectée à la zone d'affichage et à l'aide de laquelle l'utilisateur se déplace par "scrolling" vers un message voulu et sélectionne, selon les besoins, la fonction "Écouter" ou "Voir", la fonction " Écouter" initiant un appel vers le service de messagerie vocale.
